# DEMANDE DE BREVET EUROPEEN

(11) **EP 4 000 751 A1**
(43) Date de publication de la demande: **25.05.2022**
(21) Numéro de dépôt: 20206871.4
(22) Date de dépôt: 11.11.2020
(51) Int. Cl.: B06B 3/00, B23K 20/10

(54) **OUTIL VIBRANT ET SYSTÈME VIBRATOIRE COMPRENANT UN TEL OUTIL**

(71) Demandeur: Roten, Maxime, 2063 Fenin (CH)
(72) Inventeur: Roten, Maxime, 2063 Fenin (CH)
(74) Mandataire: P&TS SA (AG, Ltd.)

(57) **Abrégé**

L'invention concerne un outil vibrant et un système vibratoire comprenant un tel outil. Cet outil (100) massif définit au moins une portion de tête (102) dans le prolongement d'une portion de jambe (104), la portion de tête (102) étant allongée selon une première direction (X), la portion de jambe (104) étant allongée selon une deuxième direction (Z) orthogonale à la première direction (X), la portion de tête (102) définissant à chacune de ses extrémités selon la première direction (X) un profil courbe, ,
ledit outil (100) étant agencé de sorte que pendant la vibration à une fréquence de travail f0 prédéfinie, se forme au moins une zone nodale (180) et au moins une zone fonctionnelle (190) qui présente une déformation pendant ladite excitation vibratoire, et ledit outil (100) comportant au moins un orifice de montage (138) apte à relier ledit outil (100) à un élément présentant une énergie vibratoire.

## Description

### Domaine technique

La présente invention concerne un outil vibrant, à savoir un outil dont l'utilisation s'effectue lorsque cet outil est soumis à une vibration, afin de réaliser l'opération pour laquelle cet outil est prévu. Par exemple, les outils à ultrasons de type sonotrode sont des outils vibrants utilisés pour l'application des ultrasons dans divers procédés. Selon un autre exemple, les boosters utilisés pour la fixation et l'augmentation d'amplitude de vibration dans les systèmes à ultrasons sont également des outils vibrants.

Parmi les systèmes à ultrasons, on peut citer de manière non limitative les systèmes à soudure plastique, tels que les presses électriques de soudage ultrasons, les systèmes de scellage, de tranchage, de découpage ou d'assemblage à ultrasons. Ces systèmes ou installations permettent notamment de réaliser les applications industrielles suivantes :
- soudage de pièces en plastique et en métal,
- découpage d'aliments, de textile, de plastique, de tissus organiques,
- le nettoyage de pièces par des bains à ultrason,
- le tamisage de poudre....

L'outil selon la présente invention est un outil soumis à une excitation vibratoire qui reporte cette excitation sur un autre élément. Cet élément peut être un élément fluidique, un élément gazeux, un élément liquide, un élément souple et bidimensionnel comme par exemple un tissu, ou un élément solide comme une autre pièce métallique par exemple. Selon une possibilité, cet outil est métallique. Selon une possibilité, cet outil forme un ensemble intégral. En particulier, mais de façon non limitative, cet outil est soumis à une excitation vibratoire de type ultrason.

Notamment, selon une possibilité, cet outil forme une sonotrode, à savoir une pièce métallique soumis à une excitation sous forme d'onde ultrason et qui restitue cette excitation à un autre élément. Les ondes ultrasons s'entendent comme des ondes présentant une fréquence comprise entre 20 KHz et 70 KHz. Ainsi, la sonotrode résonne en fréquence en se "contractant" et en se "dilatant" x fois par seconde (x étant la fréquence) dans une amplitude généralement de quelques micromètres (par exemple de 13 à 130 µm environ).

La présente invention concerne également un système vibratoire comportant un tel outil vibrant.

### Etat de la technique

Dans ces systèmes vibratoires, on trouve classiquement différents organes fonctionnels, parmi lesquels un générateur d'ultrasons, un bâti, une table d'appui, une tête de fixation mobile par rapport au bâti, :
- un convertisseur piezo-électrique (ou transducteur) qui est relié électriquement au générateur d'ultrasons et qui est monté sur la tête de fixation ; ce transducteur a pour fonction de transformer la fréquence électrique en vibrations mécaniques de même fréquence,
- un booster, ou modificateur d'amplitude, monté sur le transducteur et qui permet d'augmenter ou de réduire l'amplitude produite par le transducteur, et
- une sonotrode montée sur le booster et qui transmet l'énergie ultrasonore à la pièce à souder ou à couper et qui forme le dernier élément en aval de la chaîne acoustique, et forme l'outil de travail.

Cet outil présente une géométrie et une dimension dépendant de différents paramètres, parmi lesquels :
- la fréquence vibratoire utilisée pour l'excitation,
- la zone de contact ou surface utile de la sonotrode qui est utilisée pour appliquer et retransmettre l'énergie vibratoire, et pour accomplir une tâche...
A cet effet, actuellement les concepteurs de sonotrode partent d'une barre de matière ronde ou carré qui est ajustée :
- en longueur pour correspondre grossièrement à la fréquence s'excitation,
- par différentes détails géométriques pour correspondre à l'application et à la fréquence s'excitation qui sera utilisée (ajustement plus fin). Parmi les différents types de sonotrodes connues, une forme fréquente de sonotrode correspond à une forme générale conique pour de la soudure ou bien une forme de burin ou de lame à section triangulaire pour de la découpe (sonotrode linéaire).

Par ailleurs, un outil de type sonotrode comporte non seulement une zone utile ou zone de travail mais également des zones spécifiques au moins pour le montage de l'outil dans la chaîne de transmission de l'excitation vibratoire (cette chaîne formant un système vibratoire), et pour la zone utile ou zone de travail.

Ce système vibratoire comporte, éventuellement au niveau de l'outil ou d'une autre partie, au moins une zone spécifique pour fixer ce système vibratoire dans l'installation ou la machine. Par exemple, classiquement le booster comporte une flasque annulaire en regard du point nodal de vibration, afin de permettre la fixation rigide du système vibratoire sur un support tel qu'un bâti de machine. On profite donc de l'existence d'une zone nodale pour effectuer cette fixation. Une telle zone nodale est une zone entourant un point nodal, et dans laquelle la déformation est très limitée, cette déformation étant nulle dans une ou plusieurs directions à l'emplacement du point nodal.

Le fait que le système vibratoire ne peut être fixé qu'au point nodal sur le booster empêche d'utiliser le système vibratoire pour d'autres applications, notamment du fait de l'encombrement de ce mode de fixation. En outre, la sonotrode ne peut être contact qu'avec la pièce à traiter par cette sonotrode formant outil, faute de quoi si un autre élément venait en contact avec la sonotrode, il s'ensuivrait un effet de grippage néfaste au bon déroulement du traitement de la pièce.

Le document EP2300217 décrit un système de fixation de sonotrodes. Dans le document, EP2300217, le support comprend une partie de contact ayant une surface d'appui intérieure qui est utilisée pour mettre en contact la sonotrode. Une bride s'étend vers l'extérieur à partir de l'arbre de liaison et se termine par un périmètre extérieur. Une partie de montage annulaire est fixée à la bride entre la partie de contact et le périmètre extérieur. La partie de montage annulaire est construite de telle sorte qu'elle entre en résonance environ à la fréquence prédéterminée, et en fonctionnement, la partie de contact de la monture est couplée à la sonotrode en un point formant une surface d'appui extérieure où la sonotrode forme un nœud à ladite fréquence prédéterminée.

Les documents US1805284912 et US1806022016 décrivent un système de fixation d'un ensemble transducteur et sonotrode. Dans le document US1805284912, on propose une interface de structure de support positionnée à un nœud de déplacement oscillant longitudinal du transducteur ; une structure de support espacée de la sonotrode et s'étendant depuis l'interface de structure de support dans une direction sensiblement parallèle à un axe longitudinal de la sonotrode ; et une bride montée sur la structure de support au nœud de déplacement oscillant radial de la structure de support. Le document US1806022016 prévoit un montage intégré en flexion pour l'isolation dynamique des transducteurs ultrasonores à utiliser avec une machine de câblage par fil. Le transducteur présente un corps de forme généralement allongée ayant des parties avant, arrière et principale. Le transducteur possède des brides de montage pour le montage du transducteur sur la machine de câblage. Les brides de montage ont au moins deux flexions intégrées qui relient la bride de montage à la partie principale du corps du transducteur et définissent au moins un orifice de flexion.

Pour les systèmes de fixation d'un outil ou autre élément vibrant se pose le problème de tenir compte des différentes composantes de la déformation en fonctionnement vibratoire. En général, un compromis est effectué pour le choix de l'emplacement de fixation afin de tenir compte à la fois de la composante axiale et de la composante radiale de la déformation, pour que le point de fixation soit le plus proche possible à la fois d'un point nodal axial et d'un point nodal radial. Des brides ou autres portions en excroissance sont utilisées pour servir de zone de fixation et perturbent le comportement vibratoire de la sonotrode.

On comprend que les systèmes de fixation de sonotrodes proposés jusqu'alors sont complexes, et exigent différentes pièces au montage, requièrent un temps de montage et démontage significatif et présentent des géométries et encombrements qui limitent les applications possibles de la sonotrode.

### Bref résumé de l'invention

Un but de la présente invention est de proposer un outil vibrant exempt des limitations des outils vibrants connus.

Un autre but de l'invention est de fournir un outil vibrant qui puisse être utilisé non seulement pour sa fonction en mode vibratoire, mais également qui puisse être directement et simplement fixé à un support ou un bâti de machine ou une autre installation.

Selon l'invention, ces buts sont atteints notamment au moyen d'un outil apte à vibrer lorsqu'il est soumis à une excitation vibratoire de fréquence f, ledit outil étant massif et définissant:
- au moins une portion de tête située dans le prolongement d'une portion de jambe qui est centrée par rapport à la portion de tête, la portion de tête étant de forme générale allongée selon une première direction X, la portion de jambe étant de forme générale allongée selon une deuxième direction Z orthogonale à la première direction X, la portion de tête définissant à chacune de ses extrémités selon la première direction un profil courbe,
   ledit outil définissant aussi
   une première face principale et une deuxième face principale présentant le même contour qui délimite au moins ladite portion de tête et ladite portion de jambe selon une forme en T, et
- une bordure constituée d'une troisième face encerclant ledit outil entre la première face principale et la deuxième face principale,
ledit outil étant agencé de sorte que pendant la vibration à une fréquence de travail f0 prédéfinie, au moins une zone dudit outil forme une zone nodale et au moins une zone dudit outil forme une zone fonctionnelle qui présente une déformation pendant ladite excitation vibratoire, et
ledit outil comportant en outre au moins un orifice de montage débouchant dans la bordure et apte à relier ledit outil à un élément présentant une énergie vibratoire.

On comprend que cette troisième face s'étend entre le contour de la première face principale et le contour de la deuxième face principale. Cette troisième face s'étend de façon orthogonale par rapport à la première face principale et par rapport à la deuxième face principale.

Le demandeur a trouvé qu'un outil vibrant présentant une telle géométrie est apte à vibrer tout en gardant des zones nodales aptes à la fixation de l'outil.

Cette solution présente notamment l'avantage par rapport à l'art antérieur de permettre d'effectuer un maintien direct de l'outil vibrant (par exemple à titre de sonotrode) sur une machine ou un système, et ce au moins au moyen de l'orifice de fixation.

De cette façon, grâce notamment à la géométrie de l'outil, on ne perturbe pas le mode propre de vibration de l'outil contrairement à bon nombre d'outils vibrants de l'art antérieur.

L'outil selon la présente invention présente une géométrie qui présente des points nodaux entourés de zones nodales permettant notamment de fixer l'outil à un élément extérieur rigide et fixe ou bien de monter sur l'outil un élément rotatif (tel qu'une tige qui sert de mèche de perçage), tout en gardant la liberté requise pour la propagation de l'onde mécanique et à l'excitation vibratoire de l'outil à son mode propre en dehors des zones nodales, comprenant des zones fonctionnelles. Il est en effet possible de maintenir l'outil dans trois directions de manière suffisamment précise, tout en laissant l'outil vibrer sans restriction. La zone fonctionnelle correspond à une zone de l'outil avec une variation de déformation importante, de forte amplitude, qui est utilisée à titre de vibration mécanique lors de la mise en œuvre de l'outil.

La première face principale et la deuxième face principale présentent le même contour, c'est-à-dire qu'elles présentent la même forme et la même taille, en d'autres termes le contour de la première face principale et de la deuxième face principale sont superposables.

Selon certains modes de réalisation, ledit outil définit deux plans de symétrie pour la portion de tête, comprenant un premier plan de symétrie P1 formé du plan moyen situé entre la première face principale et la deuxième face principale et un deuxième plan de symétrie P2 parallèle à la deuxième direction, le premier plan P1 et le deuxième plan P2 étant orthogonaux entre eux.

Selon certains modes de réalisation de l'outil, le premier plan de symétrie P1 et le deuxième plan de symétrie P2 sont également les plans de symétrie de la portion de jambe.

Selon certains modes de réalisation de l'outil, la largeur la plus grande (C) de la portion de jambe selon la première direction (X) est plus petite que la largeur la plus grande (I) de la portion de tête selon la première direction,
à savoir C <I
Il s'agit de configurations dans lesquelles la portion de jambe, qui est toujours plus étroite que la tête, est par exemple dans certains cas constituée de tronçons de plus en plus mince au fur et à mesure que la distance du tronçon de la portion de jambe avec la tête est plus grande.

Selon certains modes de réalisation de l'outil, le rapport entre la largeur la plus grande (I) de la portion de tête selon la première direction et la largeur la plus grande (C) de la portion de jambe selon la première direction (X) est plus grande ou égale que 1,4 à savoir 1,4 ≤ I / C.

L'une ou l'autre des dispositions des deux paragraphes précédents permet, grâce à une portion de jambe plus étroite que la portion de tête, de partager le mouvement vibratoire de l'outil en différenciant le mouvement vibratoire de la portion de tête du mouvement vibratoire de la portion de jambe. Cela permet de conserver un mouvement propre et bien défini aux points nodaux dans la portion de tête et d'autre part de former avec la portion de jambe un corps se déformant de façon autonome.

Selon certains modes de réalisation de l'outil, la dimension P la plus grande entre la première face et la deuxième face, forme la profondeur P de l'outil et cette profondeur P est plus petite ou égale à la largeur la plus grande (I) de la portion de tête selon la première direction,
à savoir P ≤ I.

Selon certains modes de réalisation, ledit outil comporte au moins une zone de fixation attenante à ladite première face principale et/ou à ladite deuxième face principale et apte à relier ledit outil à un autre élément.
cet autre élément est par exemple un bâti machine, une plaque ou tout autre pièce statique constituant un support fixe pour l'ensemble ultrasonique ou alors un élément vibrant tel qu'une mèche de perçage ou une tige ayant un mode propre de déformation à la même fréquence vibratoire f0 que ledit outil.

Selon certains modes de réalisation, ledit outil comporte au moins deux zones de fixation situées dans la portion de tête, chacune des zones de fixation se trouvant de part et d'autre de la projection de la portion de jambe selon la deuxième direction (Z). Dans ce cas, on peut se trouver dans une situation avec une zone de fixation à chaque extrémité de la portion de tête. Cette zone de fixation comporte par exemple un trou de fixation, traversant, ou non la portion de tête, par exemple selon la direction Y. Préférentiellement, ledit outil comporte exactement deux zones de fixation. Dans ce dernier cas, les deux zones de fixation sont de préférence placées symétriquement l'une par rapport à l'autre par rapport à un plan (Y, Z).

Selon certains modes de réalisation, ledit outil comporte au moins deux zones nodales situées dans la portion de tête, chacune de part et d'autre de la projection de la portion de jambe selon la deuxième direction (Z).
Dans ce cas, on peut se trouver dans une situation avec une zone nodale à chaque extrémité de la portion de tête.
Préférentiellement, ledit outil comporte exactement deux zones nodales. Dans ce dernier cas, les deux zones nodales sont de préférence placées symétriquement l'une par rapport à l'autre par rapport à un plan (Y, Z).

Selon certains modes de réalisation de l'outil, la ladite zone de fixation est située à l'emplacement d'une zone nodale.

Selon certains modes de réalisation de l'outil, les extrémités de la portion de tête selon la première direction (X) délimitent sur la première face principale et sur la deuxième face principale un profil courbe. Ce profil courbe peut comporter un arc de cercle, voire un demi-cercle.

Selon certains modes de réalisation, ledit outil présente depuis sa première face principale ou depuis sa deuxième face principale, une forme de T définissant une seule tête et une seule jambe.

Selon certains modes de réalisation, ledit outil présentant depuis sa première face principale ou depuis sa deuxième face principale, une forme de double T avec un premier tronçon en forme de T présentant une portion de tête et une portion de jambe, et un deuxième tronçon en forme de T situé dans la prolongation du premier tronçon, ledit deuxième tronçon présentant une portion de tête et une portion de jambe, dans lequel ledit premier tronçon et ledit deuxième tronçon sont alignés le long de la deuxième direction (Z).

Selon certains modes de réalisation de l'outil, ladite première face principale et ladite deuxième face principale sont essentiellement planes et parallèles entre elles.

Selon certains modes de réalisation de l'outil, ladite bordure est constituée de surfaces perpendiculaires à ladite première face principale et à ladite deuxième face principale.

Selon certains modes de réalisation de l'outil, ledit outil comporte en outre au moins un orifice de réglage formé d'un trou traversant ledit outil entre la première face principale et la deuxième face principale. Cet orifice de réglage ou ces orifices de réglage permet(tent) d'ajuster la fréquence de travail f0 et de garder des zones nodales. Selon une disposition possible, ledit outil comporte un orifice de réglage placé dans une zone de la portion de jambe qui est adjacente à la portion de tête. Selon une autre disposition possible, ledit outil comporte plusieurs orifices de réglage placés dans la portion de tête.

Selon certains modes de réalisation, l'outil est monobloc.

L'invention propose une conception particulière d'outil vibrant différente, notamment un outil à ultrasons de type sonotrode ou booster, qui puisse être fixé directement au bâti d'une machine. L'outil en question est exempt des limitations de possibilité d'intégration des outils connus de type sonotrode ou booster dans un système mécanique ainsi que des possibilités de fixations connues et utilisées jusqu'à présent.

Comme on le verra ci-après, un tel outil permet notamment d'être monté comme sonotrode à un système conventionnel comportant un transducteur et un booster, ce qui le rend compatible avec des systèmes de génération et d'amplification d'ondes vibratoires existants, notamment des systèmes de génération et d'amplification d'ondes ultrasonores existants.

De plus, comme il sera exposé ci-après l'outil vibrant selon l'invention est utilisable selon des fonctionnalités diverses facilement intégrables dans des systèmes ou des procédés de fabrication industriels, tels que ceux existants, ou également selon de nouvelles possibilités d'utilisation.

### Brève description des figures

Des exemples de mise en œuvre de l'invention sont indiqués dans la description illustrée par les figures annexées dans lesquelles :
- La figure 1 illustre en perspective un outil vibrant conforme à la présente invention selon un premier mode de réalisation,
- La figure 2 est une vue en projection de l'outil de la figure 1 selon sa face avant selon la direction II de la figure 1,
- La figure 3 est une vue de côté en projection de l'outil de la figure 1 selon un de ses côtés selon la direction III de la figure 1,
- La figure 4 est une vue analogue à celle de la figure 3 pendant la mise en vibration de l'outil de la figure 1,
- Les figures 5 et 6 sont des vues de face analogues à celle de la figure 2 à deux moments distincts pendant la mise en vibration de l'outil de la figure 1, les lignes en traits tillés indiquant les zones nodales,
- La figure 7 est un graphique représentant des déformations de l'outil selon le premier mode de réalisation en fonction du moment de la période de vibration,
- La figure 8 illustre en perspective un outil vibrant conforme à la présente invention selon une première variante du premier mode de réalisation,
- La figure 9 est une vue de côté en projection de l'outil de la figure 8 selon un de ses côtés selon la direction X de la figure 8,
- Les figures 10 et 11 sont des vues de côté et en coupe de l'outil de la figure 8 selon deux possibilités de construction pour l'orifice de fixation,
- La figure 12 est une vue de côté en projection de l'outil conforme à la présente invention selon une deuxième variante du premier mode de réalisation,
- La figure 13 est une vue en coupe de l'outil de la figure 12,
- La figure 14 est une vue d'un outil vibrant selon une troisième variante du premier mode de réalisation selon sa face avant,
- La figure 15 est une vue de face d'un outil vibrant conforme à la présente invention selon un deuxième mode de réalisation selon sa face avant,
- La figure 16 illustre en perspective un outil vibrant conforme à la présente invention selon une première variante du deuxième mode de réalisation,
- La figure 17 illustre en perspective un outil vibrant conforme à la présente invention selon une deuxième variante du deuxième mode de réalisation,
- La figure 18 illustre en perspective un outil vibrant conforme à la présente invention selon une troisième variante du deuxième mode de réalisation,
- La figure 19 est une représentation de la correspondance entre la géométrie d'un outil selon une quatrième variante du deuxième mode de réalisation et sa longueur L qui correspond à la demi-longueur d'onde du mode vibratoire,
- La figure 20 est une représentation de la correspondance entre un outil selon un troisième mode de réalisation en forme de double T, vu en projection, et son mode vibratoire,
- La figure 21 illustre en perspective l'outil vibrant de la figure 20,
- La figure 22 représente une vue en perspective d'un assemblage avec un outil selon une première variante du troisième mode de réalisation, dans lequel l'outil est utilisé comme support de plaquette d'usinage dans le cas de la fabrication d'une pièce de révolution,
- La figure 23 est une représentation en éclaté de l'assemblage de la figure 22,
- La figure 24 représente une vue en perspective d'un assemblage avec un outil selon le troisième mode de réalisation, dans lequel l'outil est utilisé comme support d'une mèche de perçage dans le cas de la fabrication par usinage d'une pièce de révolution, et
- La figure 25 est une représentation en éclaté de l'assemblage de la figure 24.

### Exemple(s) de mode de réalisation de l'invention

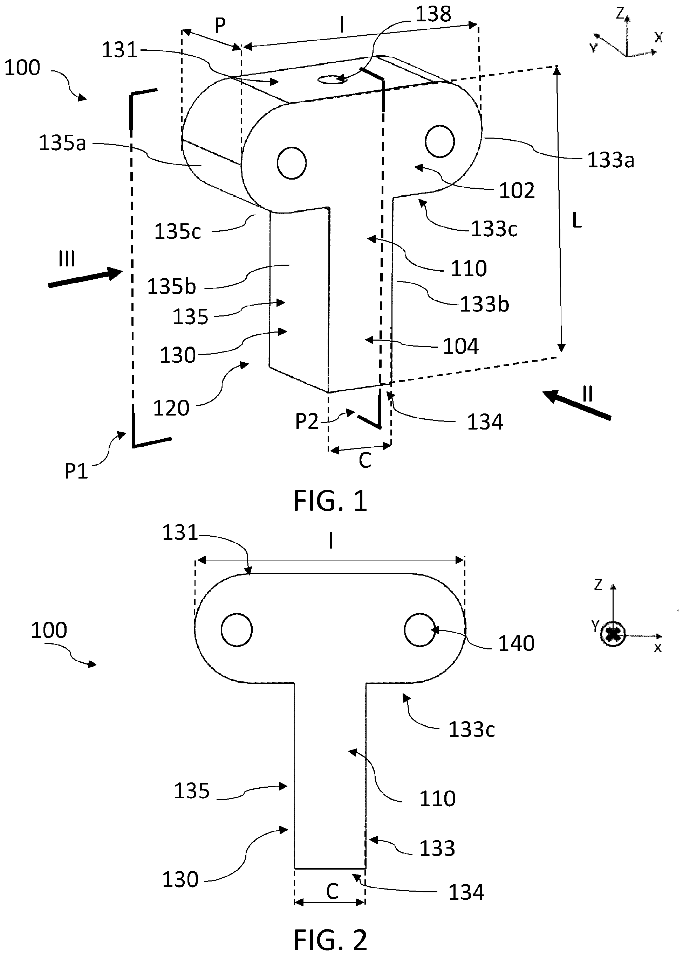

L'outil vibrant, présenté dans les trois modes de réalisation illustrés sur les figures, se décline selon une forme globale en T pour le premier et le deuxième mode de réalisation, tandis que le troisième mode de réalisation présente une forme globale de double T avec les deux T alignés et superposés. Cette forme générale en T permet d'identifier une portion en forme de tête aplatie (portion de tête) et une portion en forme de jambe (portion de jambe), les deux portions définissant chacune une direction principale. De façon préférentielle, la direction principale de la portion de tête est orthogonale à la direction principale de la portion de jambe. On se rapporte à la figure 1 représentant un outil vibrant 100 selon un premier mode de réalisation de l'invention. Cet outil vibrant présente une forme générale de T. On distingue une première face principale 110 (à l'avant sur la figure 1) et une deuxième face principale 120 (cachée à l'arrière sur la figure 1), planes et parallèles entre elles et entre lesquelles le contour de l'outil 100 suit une bordure 130. Cette bordure 130 est constituée d'une surface continue reliant la première face principale 110 à la deuxième face principale 120, en étant perpendiculaire à la première face principale 110 à et la deuxième face principale 120. La profondeur P de l'outil 100 correspond à la distance séparant la première face principale 110 de la deuxième face principale 120, selon un axe Y (troisième direction Y). Le contour de la première face principale 110 et de la deuxième face principale 120 délimite la forme en T, avec une portion de tête 102 s'étendant selon une direction principale parallèle à la première direction (X), cette portion de tête étant prolongée en direction d'un axe Z (deuxième direction Z) par une portion de jambe 104, elle-même s'étendant selon une direction principale parallèle à la deuxième direction (Z).

Cette bordure 130 encercle l'outil 100. Cette bordure 130 définit quatre faces opposées deux à deux qui délimitent les quatre côtés de la première face principale 110 et de la deuxième face principale 120. Cette bordure 130 définit deux faces d'extrémité 131 et 134 sur deux côtés opposés de l'outil. Entre ces deux faces d'extrémité 131 et 134 on définit la longueur L de l'outil100 (selon l'axe Z). Cette bordure 130 définit également deux faces latérales 133 et 135 ou flancs sur les deux autres côtés opposés de l'outil 100. Entre ces deux faces latérales 133 et 135 on définit la largeur l de l'outil (selon un axe X orthogonal à l'axe Z) à l'emplacement de la portion de tête 102. Dans ce premier mode de réalisation, les faces d'extrémité 131 et 134 sont planes et parallèles entre elles, et également parallèle au plan (X, Y), la face d'extrémité 131 de la portion de tête 102 étant plus étendue en direction de l'axe X que la face d'extrémité 134 de la portion de jambe 104.

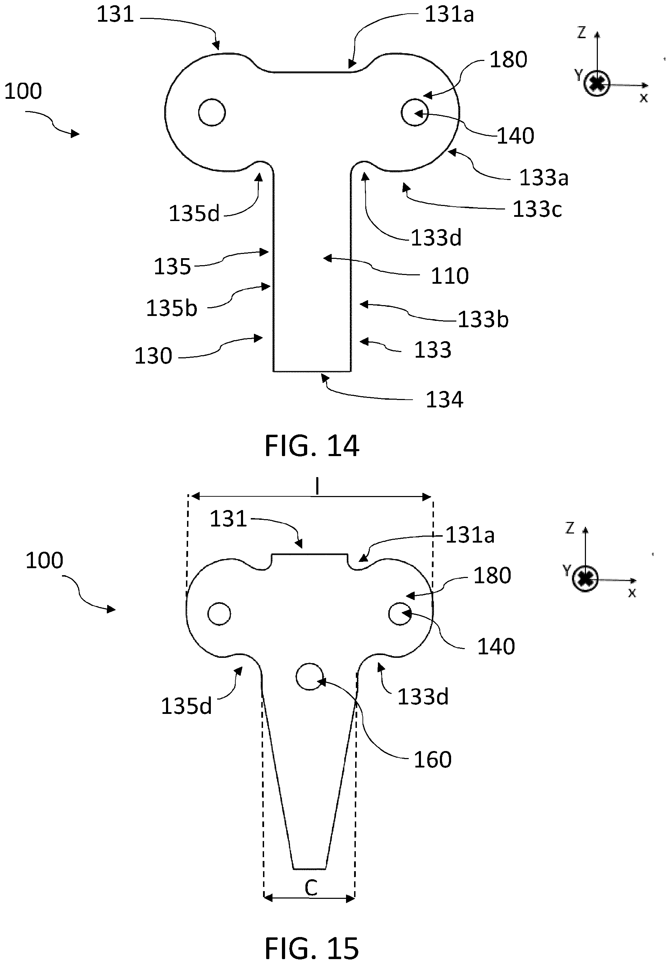

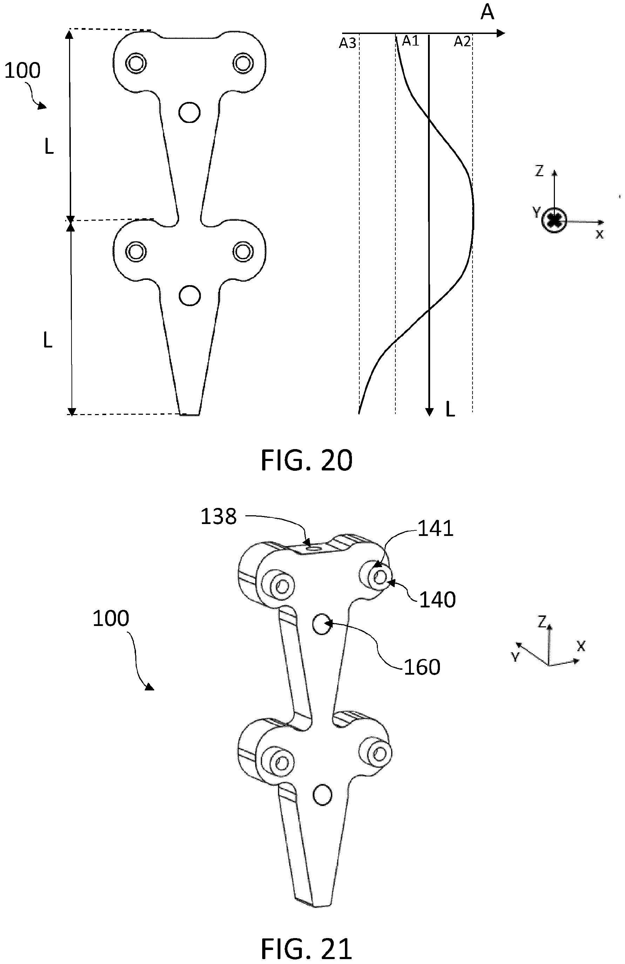

Dans ce premier mode de réalisation, les faces latérales 133 et 135 présentent un tronçon courbe 133a, 135a convexe dans la portion de tête 102 et un tronçon plan 133b, 135b et parallèle à la direction Z dans la portion de jambe 104. Dans le cas des variantes des figures 1 à 14 de ce premier mode de réalisation, mais aussi dans le cas de toutes les variantes du deuxième mode de réalisation représentées sur les figures 15 à 19, et également dans le cas de toutes les variantes du troisième mode de réalisation représentées sur les figures 20 à 25, ce tronçon courbe 133a, 135a convexe comporte une partie délimitant l'extrémité de la portion de tête 102 et qui est en forme de portion de cylindre à section circulaire : en d'autres termes, le contour de la première face principale 110 et de la deuxième face principale 120 dans les extrémités de la portion de tête 102 est un arc de cercle. Dans ce premier mode de réalisation, s'agissant des figures 1 à 12, les faces latérales 133 et 135 présentent un tronçon intermédiaire 133c, 135c plan appartenant à la portion de tête 102, situé entre le tronçon courbe 133a, 135a de la portion de tête 102 et le tronçon plan 133b, 135b de la portion de jambe 104. Ce tronçon intermédiaire 133c, 135c est parallèle aux faces d'extrémité 131 et 134.

Les axes X, Y, Z définissent un repère orthogonal. Dans ce premier mode de réalisation, l'outil 100 présente deux plans de symétrie P1 et P2, orthogonaux entre eux. Le premier plan de symétrie P1 est un plan de symétrie pour l'outil 100, parallèle au plan (X, Z), situé entre la première face principale 110 et la deuxième face principale 120 (c'est un plan moyen par rapport à la première face principale 110 et à la deuxième face principale 120). Le deuxième plan de symétrie P2 est un plan de symétrie pour l'outil 100, parallèle au plan (Y, Z), entre les deux faces latérales 133 et 135.

L'outil 100 forme un objet massif qui comporte les orifices suivants :
- un orifice de montage 138 s'étend dans l'outil 100 depuis la face d'extrémité 131, par exemple sous forme d'un alésage ou d'un taraudage, au centre de la face d'extrémité 131 pour respecter la symétrie de l'outil 100 et permettre un fonctionnement correct lorsqu'il est soumis à l'excitation vibratoire ; de manière optimale, ledit orifice de montage 138 est centré sur l'une des faces d'extrémité 131 ou 133, avec ledit orifice de montage 138 qui est à l'intersection du premier plan P1 et du deuxième plan P2; de manière optionnelle, un autre orifice de montage 138 s'étend dans l'outil 100 depuis l'autre face d'extrémité 133 ; de préférence et dans les cas représentés, cet orifice de montage 138 ou ces orifice de montage 138 présente(nt) une section circulaire et sont rectilignes (selon la troisième direction Y) ; de manière plus générale, le ou les orifices de montage 138 débouche dans la bordure 130 et est apte à relier ledit outil 100 à un élément présentant une énergie vibratoire qui va exciter l'outil 100.
   et
- deux orifices de fixation 140 s'étendent dans toute la profondeur P de l'outil 100 depuis la première face principale 110, et sont répartis de manière symétrique par rapport aux plans de symétrie P1 et P2. Ces orifices de fixation 140 se présentent par exemple sous forme d'un alésage ou d'un taraudage ; de préférence et dans les cas représentés, cet orifice de fixation 140 ou ces orifices de fixation 140 présente(nt) une section circulaire et sont rectilignes (selon la direction Y).

L'orifice de montage 138 (ou les deux orifices de montage) qui débouche(nt) dans la bordure 130 ser(ven)t à relier l'outil 100 à un élément présentant une énergie vibratoire, de manière directe, ou bien de manière indirecte. En cas de présence de deux orifices de montage, l'autre orifice de montage 138 peut servir à relier l'outil 100, de manière directe, ou bien de manière indirecte, à un autre élément de la chaîne de transmission de l'excitation vibratoire (cette chaîne formant un système vibratoire).

Le ou les orifices de fixation 140 débouche(nt) dans la première face principale 110 ou bien dans la deuxième face principale 120 ou bien à la fois dans la première face principale 110 et dans la deuxième face principale 120. Ainsi, le ou les orifices de fixation 140 peuvent être des trous débouchants, ou des trous non débouchants comme des trous borgnes qui sont ouverts sur l'une ou l'autre parmi la première face principale et la deuxième face principale (dans ce cas, les différents orifices de fixation 140 peuvent s'ouvrir tous sur la même face ou bien certains sur la première face principale et d'autres sur la deuxième face principale). Le ou les orifices de fixation 140 ser(ven)t à fixer l'outil 100, de manière directe, ou bien de manière indirecte, à un autre élément qui est destiné à faire office de support de fixation à l'outil 100 et l'ensemble du système vibratoire qui y est rattaché de manière directe ou bien de manière indirecte. Le ou les orifices de fixation 140 peuvent présenter des formes et des dimensions différentes. Dans les modes de réalisation représentés, la portion de tête comporte deux orifices de fixation 140 de section circulaire situés dans les deux parties d'extrémité de la portion de tête 102. Selon une possibilité, telle que représenté sur les figures 1 à 13, les orifices de fixation 140 sont disposés à l'intérieur des tronçons courbes 133a, 135a délimitant les deux extrémités de la portion de tête 102, avec un contour courbe, par exemple en forme d'arcs de cercle, formés le long du contour de la première face principale 110 et de la deuxième face principale 120 dans les extrémités de la portion de tête 102. Selon une possibilité, les orifices de fixation 140 sont centrés autour du même centre que les arcs de cercle formant le contour des tronçons courbes 133a, 135a, ou bien entre le centre de ces arcs de cercle et l'arc de cercle correspondant.

Dans les modes de réalisation représentés, le ou les orifices de fixation 140 restent centrés sur et limités en extension sur les zones nodales 180. Le ou les orifices de fixation 140 peuvent permettre à une tige logée dans cet orifice de fixation mais non reliée à une pièce fixe, de tourner selon un mouvement de rotation alterné, par exemple dans un assemblage formant une perceuse.

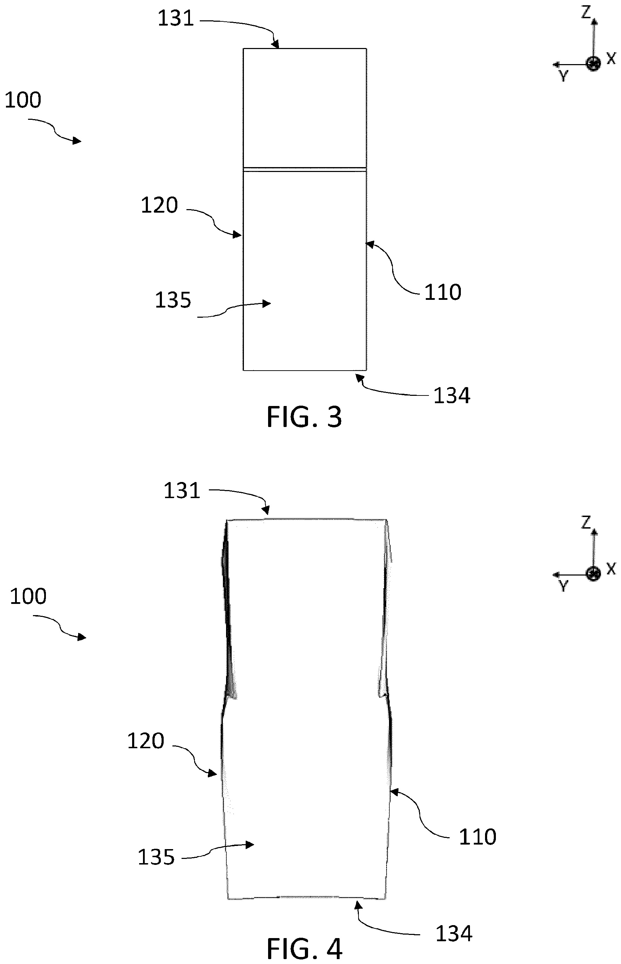

Les figures 2 et 3 représentent également l'outil 100 selon ce premier mode de réalisation au repos (non soumis à une énergie vibratoire) en projection, respectivement de face depuis la première face principale 110 et de côté depuis la face latérale 135.

La figure 4 est une vue similaire à celle de la figure 3 de cet outil 100 lorsqu'il est soumis à une énergie vibratoire selon une fréquence de travail f0, correspondant notamment à son mode propre. On voit ainsi sur cette figure 4 que les faces principales 110 et 120 restent planes ou quasi-planes et parallèles entre elles. Ceci reste le cas pendant toute la durée de l'excitation vibratoire de l'outil 100. Cette situation permet à l'outil d'être attaché par des zones quasi-non déformées à une base rigide, tel qu'un bâti de machine, qui ne vibre donc pas puisqu'aucune énergie vibratoire ne lui est transmise par les orifices de fixation 140 et par les faces principales 110 et 120.

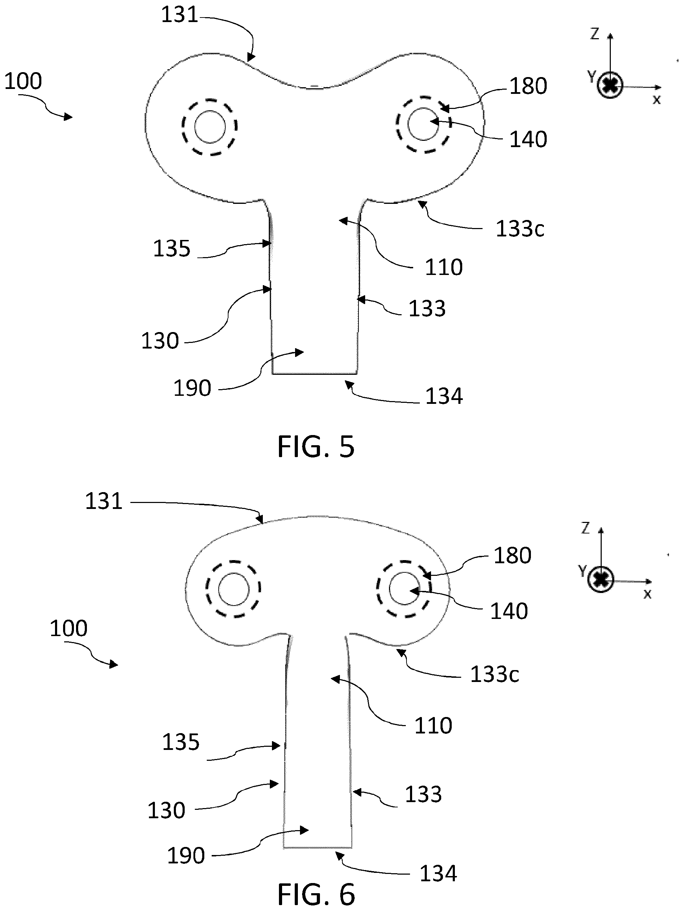

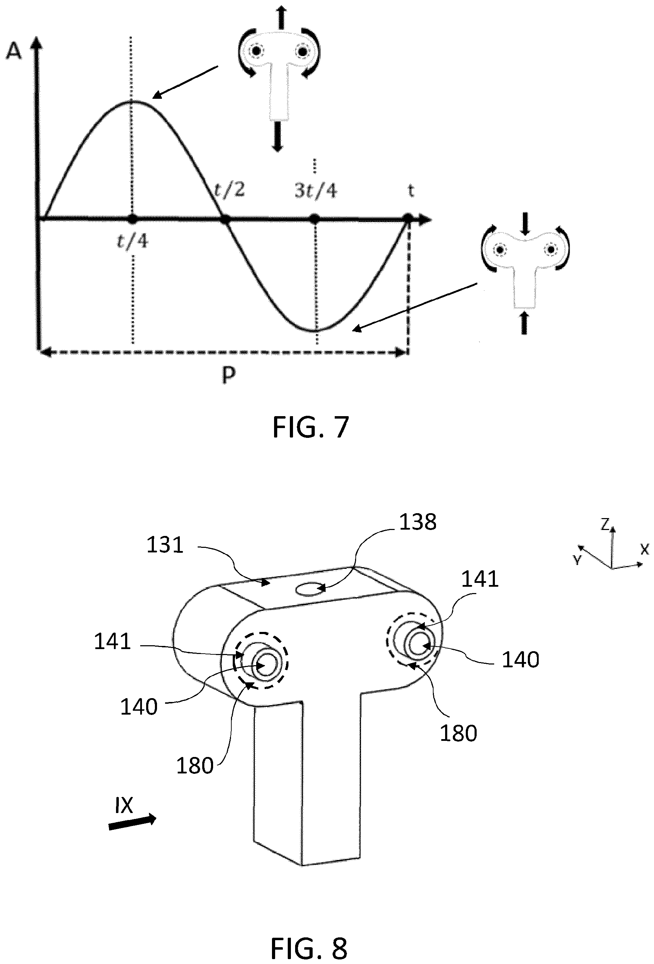

Les figures 5 et 6 sont des vues similaires à la vue de face de la figure 2 de cet outil 100 lorsqu'il est soumis à une énergie vibratoire selon une fréquence de travail f0, correspondant notamment à son mode propre, à deux moments différents correspondant aux deux déformations extrêmes, respectivement une déformation en contraction maximale et une déformation en élongation maximale selon l'axe Z. Ces deux moments différents correspondent aux amplitudes maximales de la phase positive et de la phase négative de la période P de vibration du système comme il est illustré sur la figure 7. La période de vibration du système étant définie par un intervalle de temps P, l'amplitude maximale d'élongation a lieu au moment t= P/4 (t/4) et l'amplitude maximale de contraction a lieu au moment t= 3P/4 (3t/4). Sur la figure 7, on a repris la forme de l'outil 100 de la figure 6 en regard du moment t= P/4 (amplitude A de déformation maximale en élongation positive) et la forme de l'outil 100 de la figure 5 en regard du moment 3P/4 (amplitude de déformation maximale en élongation négative ou maximale en contraction). On voit sur les figures 5 et 6 que les faces d'extrémités 131 et 133 se déforment en prenant une forme courbe, dont le profil (projection sur la première face principale 110) est alternativement concave (sur la figure 5) et convexe (sur la figure 6), et l'extension spatiale en direction de l'axe X, soit selon la direction principale de la portion de tête 102, passe d'un maximum (distance entre les tronçon courbe 133a, 135a des faces latérales 133, 135 sur la figure 5) à un minimum (distance entre les tronçon courbe 133a, 135a des faces latérales 133, 135 sur la figure 6). On voit également sur ces figures 5 et 6 respectivement que la portion de jambe 104 reste globalement rectiligne mais se contracte et s'étire en direction de l'axe Z ou direction principale de la portion de jambe 104.

On y voit également qu'il existe des zones nodales 180 entourant les orifices de fixation 140 et délimitées par des lignes en traits tillés. En effet, les orifices de fixation 140 sont placés à l'emplacement de points nodaux de l'outil, et restent donc dans une position qui est fixe dans l'outil et qui reste identique par rapport aux autres orifices de fixation 140. On comprend que ces zones nodales 180 s'étendent dans toute la profondeur de l'outil 100, autour de chaque orifice de fixation 140, entre la première face principale 110 et la deuxième face principale 120. On forme en particulier deux zones nodales 180. De préférence, comme sur les figures, on dispose de deux zones nodales 180 sur lesquelles sont centrés les points de fixations (orifices de fixations 140 avec ou sans bossages 141). Ces deux zones nodales 180 sont réparties symétriquement de part et d'autre du plan de symétrie P2. Les deux zones nodales 180 se trouvent de préférence et dans le cas des variantes représentées sur toutes les figures, selon l'axe X, situées en un point se trouvant dans la partie de la portion de tête 102 qui dépasse de part et d'autre de la portion de jambe 104: ainsi, ces deux zones nodales 180 sont situées de part et d'autre du plan de symétrie P2, et non dans le prolongement selon la deuxième direction Z de la portion de jambe 104 En dehors des zones nodales 180, sont formées des zones fonctionnelles 190 présentant une déformation pendant la vibration de l'outil 100 et aptes à constituer une zone de travail pour la mise en vibration de l'outil ou d'un autre élément à faire vibrer lors de l'utilisation de l'outil 100. Ces zones fonctionnelles 190 s'étendent notamment dans la portion de jambe 104, et en particulier entre l'extrémité libre de la portion de jambe (face d'extrémité 134) et l'orifice de réglage 160 s'il existe, comme il sera décrit ci-après.

On comprend de ce qui précède que grâce à cet outil de forme adaptée, au moins un orifice de fixation 140 est centré sur l'une desdites zones nodales 180. On peut ainsi disposer d'un outil vibrant 100 directement attaché par des zones quasi-non déformées à une pièce ou un élément intermédiaire qui n'est ainsi pas soumis aux vibrations de l'outil 100 est ne rentre donc pas en vibration. Il est donc possible d'éviter de recourir à un système de fixation rapporté au booster comme dans l'art antérieur, ce qui apporte outre la simplification, également un gain de place.

On comprend de ce qui précède que grâce à cet outil 100 de forme adaptée, on dispose également d'une ou de plusieurs zones fonctionnelles 190 vibrant et se déformant, notamment avec une amplitude importante de déformation, en l'occurrence une variation de déformation plus importante que dans les zones nodales 180. Ces zones fonctionnelles 190 peuvent ainsi être utilisées comme zone de transmission d'une vibration mécanique à un autre élément travaillant grâce à cette énergie vibratoire, ou dont l'efficacité est améliorée grâce à cette énergie vibratoire.

D'une manière générale, l'outil comporte au moins un orifice de fixation 140 qui est centré sur un point nodal 180. Dans le premier mode de réalisation qui vient d'être présenté au regard des figures 1 à 5, ledit orifice de fixation 140 traverse ledit outil 100 de part en part, entre la première face principale 110 et la deuxième face principale 120. D'autres dispositions spatiales restent possibles.

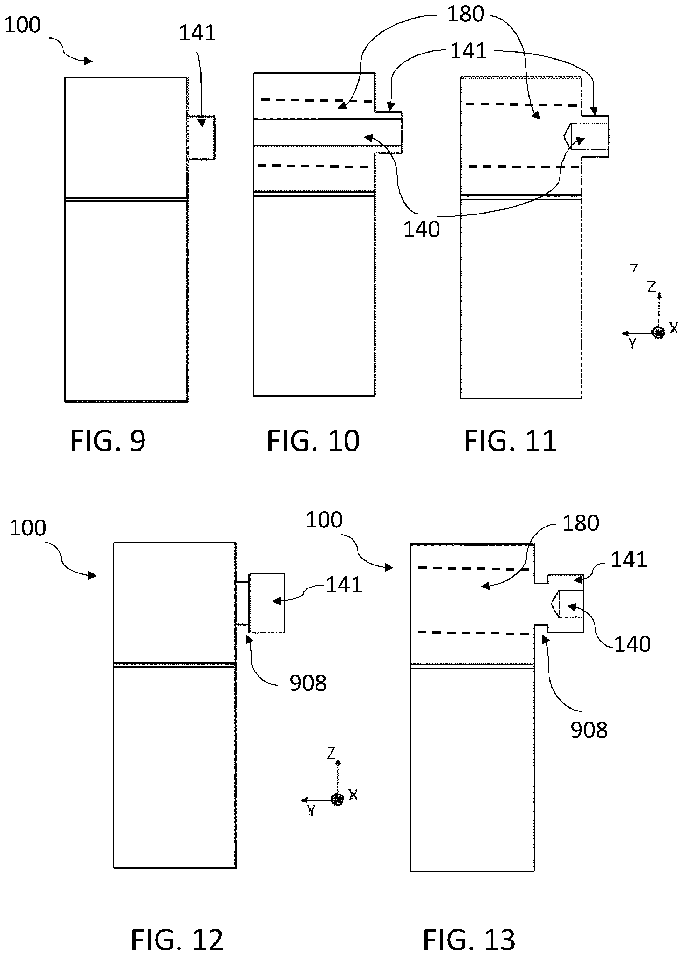

On se reporte maintenant aux figures 8 à 11 représentants une première variante de l'outil vibrant selon le premier mode de réalisation. On retrouve l'outil 100 des figures 1 à 6 avec des bossages 141 en forme de cylindres creux en saillie sur la première face principale 110 et délimitant une portion de l'orifice de fixation 140 correspondant. Dans le cas de la figure 10, les orifices de fixation 140 traversent de part en part l'outil 100 en traversant complètement la partie massique de l'outil 100 (qui correspond à l'outil dans sa version des figures 1 à 6) et les bossages 141. Dans le cas de la figure 11, les orifices de fixation 140 ne traversent pas de part en part l'outil 100 en ne s'étendant pas dans la partie massive de l'outil 100 (qui correspond à l'outil dans sa version des figures 1 à 6) mais en traversant seulement les bossages 141. Dans un cas intermédiaire (non illustré), les orifices de fixation 140 ne traversent pas de part en part l'outil 100 tout en s'étendant un peu dans la partie massive de l'outil 100 (qui correspond à l'outil dans sa version des figures 1 à 6) et en traversant également les bossages 141, les orifices de fixation 140 débouchant également à l'extrémité libre des bossages 141 : en effet la réalisation d'un perçage sous forme de trou borgne depuis l'extrémité libre des bossages 141 peut engendrer une extension de cet orifice de fixation 140 dans toute la longueur du bossage 141 et au-delà (par exemple sur quelques millimètres) dans la partie massive de l'outil 100. On peut prévoir (cas de figure non représenté) l'outil comporte en outre dans les orifices de fixation 140 délimités par les bossages 141, un élément de fixation, tel qu'une tige filetée ou une goupille cylindrique.

On se reporte maintenant aux figures 12 et 13 représentants une deuxième variante de l'outil vibrant selon le premier mode de réalisation. On retrouve l'outil 100 des figures 8 à 11 avec des bossages 141 en forme de cylindres creux en saillie sur la première face principale 110 et délimitant une portion de l'orifice de fixation 140 correspondant. Dans le cas des figures 12 et 13, le bossage cylindrique 141 est élargi et se raccorde à la première face principale 110 par une gorge d'ajustement 908. Cette deuxième variante permet de placer l'orifice de fixation 140 dans le bossage 141, avec une profondeur réduite ne s'étendant pas dans la partie massive de l'outil 100, ni même jusqu'à la profondeur de la gorge d'ajustement 908.

On se reporte maintenant à la figure 14 représentant une troisième variante de l'outil vibrant selon le premier mode de réalisation. On retrouve l'outil 100 des figures 1 à 6, hormis les deux différences décrites ci-après. Dans le cas de la figure 14, l'outil comporte en outre un renfoncement 131a plan sur la face d'extrémité 131 de la portion de tête 102, et des renfoncements 133d, 135d sur les tronçon intermédiaires 133c, 135c, à proximité du tronçon plan 133b, 135b de la portion de jambe 104. Ces renfoncements 133d, 135d forment des congés de raccordement entre la portion de tête 102 et la portion de jambe 104.

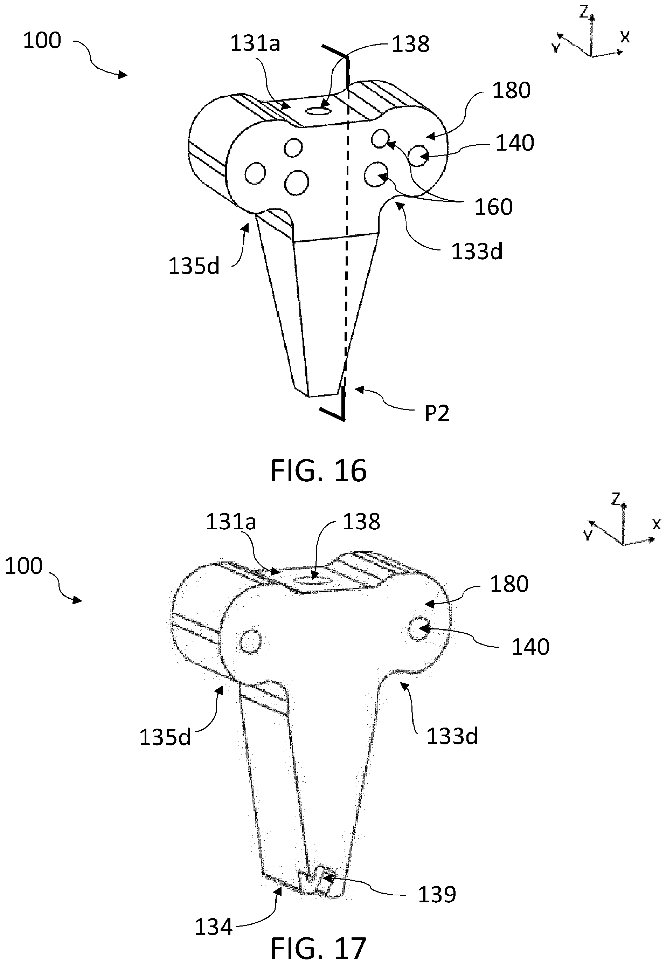

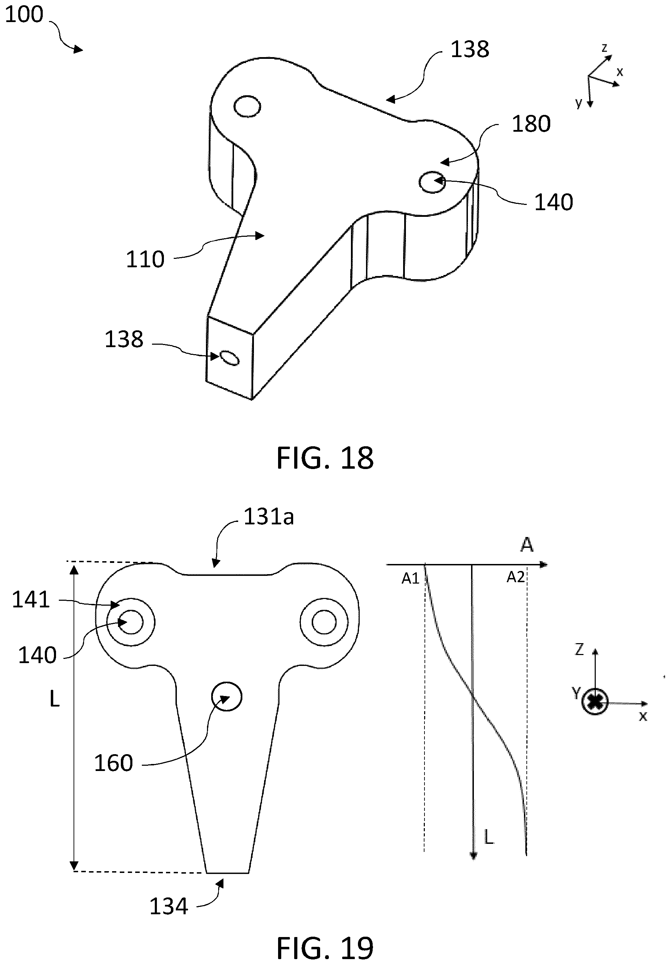

On se rapporte aux figures 15 à 19 représentants un outil vibrant 100 selon un deuxième mode de réalisation de l'invention. Pour ce deuxième mode de réalisation, l'outil 100 reprend les mêmes dispositions et parties que celles précédemment décrites en relation avec la troisième variante du premier mode de réalisation illustrée sur la figure 13, et ce s'agissant de la portion de tête 102 : à savoir avec d'une part un seul renfoncement 131a de la face d'extrémité 131 (figures 16 à 19 représentant respectivement une première, une deuxième et une troisième variante) ou bien deux renfoncements 131a de part et d'autre d'une portion pane centrale de la face d'extrémité 131 (figure 15) et d'autre part les renfoncements 133d, 135d formant des congés de raccordement entre la portion de tête 102 et la portion de jambe 104. Cet outil 100 du deuxième mode de réalisation se différencie du premier mode de réalisation essentiellement par la portion de jambe 104 qui présente une section dont la taille diminue depuis son extrémité adjacente et attachée à la portion de tête 102 jusqu'à son extrémité libre. Dans le cas de l'outil 100 de la figure 15, de la deuxième variante du deuxième mode de réalisation de la figure 17 et de la troisième variante deuxième mode de réalisation des figures 18 et 19, la première face principale 110 et la deuxième face principale 120 restent parallèles entre elles et c'est la bordure 130 qui présente un chanfrein le long des tronçons des faces latérales 133 et 135 de la portion de jambe 104. Dans le cas de la première variante du deuxième mode de réalisation de la figure 16, les quatre faces de la portion de jambe 104 sont chanfreinées, la portion de jambe 104 formant une pyramide tronquée à base rectangulaire.

Ainsi, on comprend que la portion de tête 102 de l'outil 100 du premier type définit le moyen de fixation de l'outil sur l'élément de support statique, et la portion de jambe 104 définit le moyen de propager l'onde vibratoire qui traverse l'outil depuis le dispositif vibratoire. La géométrie du chanfrein sur la bordure 130 est définie selon la résistance statique (contrainte maximale que va devoir reprendre l'outil) et l'amplification de la déformation que l'on va vouloir créer entre la portion de jonction, entre la portion de tête 102 et la portion de jambe 104, et la face d'extrémité 134. Plus l'angle de ce chanfrein est important, plus l'amplification de déformation est importante. Il y a généralement toujours une amplification de la déformation de l'outil entre la face d'extrémité 131 de la portion de tête (sur laquelle est monté le dispositif vibratoire via l'orifice de montage 138) et la face d'extrémité 134 (sur laquelle est monté un autre élément à faire vibrer lors de l'utilisation de l'outil 100, via un autre orifice de montage 138).

Cet outil 100 du deuxième mode de réalisation dispose en outre dans le cas des figures 15, 16 et 19 d'un unique orifice de réglage 160 ou bien de plusieurs orifices de réglage 160. Cet ou ces orifice(s) de réglage 160 est (sont) traversant(s) dans l'outil 100, et il(s) s'étend(ent) entre la première face principale 110 et la deuxième face principale 120 selon la direction Y. Dans le cas de la figure 16, les orifices de réglage 160 sont au nombre de quatre, par paire, les deux orifices de réglage 160 de chaque paire étant placés sur une même ligne parallèle à la direction Z, les quatre orifices de réglage 160 étant placés à une distance plus faible du deuxième plan de symétrie P2 que les orifices de fixation 140. Dans le cas des figures 15, 16 et 19, l'unique orifice de réglage 160 est situé de manière centrée sur le deuxième plan de symétrie P2, parallèlement au plan (Y, Z). En particulier, cet orifice de réglage 160 est disposé dans une zone de la portion de jambe 104 qui est adjacente à la portion de tête 102. En particulier, cet orifice de réglage 160 est disposé dans la zone de la portion de jambe 104 qui est relié à la portion de tête 102 : en présence des renfoncements 133d, 135d formant congés sur les faces latérales 133 et 135, cet orifice de réglage 160 est disposé dans l'alignement de ces deux renfoncements 133d, 135d formant congés. Également, on constate que cet orifice de réglage 160 permet d'augmenter la flexibilité de l'outil 100 et son amplitude de déformation pendant sa mise en vibration. Cet ou ces orifices de réglage 160 permet(tent) notamment d'ajuster la fréquence de travail f0 de l'outil 100. La présence de cet ou ces orifice(s) de réglage 160 permet en outre de conserver des zones nodales 180. Le nombre et la disposition de ces orifices de réglage 160 peut donc varier d'un outil vibrant à un autre.

A noter que ces orifices de réglage 160 sont possibles pour le premier mode de réalisation (variante non représentée). Dans ce cas, on peut retrouver deux paires d'orifices de réglage 160 comme dans le cas de la figure 16 : les deux orifices de réglage 160 de chaque paire sont placés sur une même ligne parallèle à la direction Z, les quatre orifices de réglage 160 sont placés à une distance plus faible du deuxième plan de symétrie P2 que les orifices de fixation 140. Alternativement, dans le cas d'un unique orifice de réglage 160, celui-ci est situé de manière centrée sur le deuxième plan de symétrie P2, parallèlement au plan (Y, Z). En particulier, cet orifice de réglage 160 serait disposé dans une zone de la portion de jambe 104 qui est adjacente à la portion de tête 102. En particulier, cet orifice de réglage 160 serait disposé dans la zone de la portion de jambe 104 qui est relié à la portion de tête 102 comme dans le cas de la figure 19.

Cet outil 100 du deuxième mode de réalisation dispose en outre dans le cas de la figure 17 (2^{ème} variante) et de la figure 18 (3^{ème} variante) d'un orifice de montage 138, 139 dans la portion de jambe 104. Pour la 2^{ème} variante de réalisation de la figure 17, l'orifice de montage 139 est une découpe (encoche) débouchant sur la face d'extrémité 134 et sur la première face principale 110 : cet orifice de montage 139 peut servir au montage d'une plaquette d'usinage ou d'un autre accessoire. Pour la 3^{ème} variante de réalisation de la figure 18, l'orifice de montage 138 débouche dans la face d'extrémité 134, de façon centrée dans la face d'extrémité 134: cet orifice de montage 138 peut servir au montage d'un accessoire sur la face 134. L'orifice de montage 138 de la 3^{ème} variante du deuxième mode de réalisation de la figure 18 peut être cylindrique, fileté ou non. L'outil 100 du deuxième mode de réalisation ne dispose pas dans le cas de la figure 17 (2^{ème} variante) et de la figure 18 (3^{ème} variante) d'orifice de réglage 160 mais il est possible du lui en adjoindre, soit sous la forme de l'unique orifice de réglage 160 de la figure 15, soit sous la forme des quatre orifices de réglage 160 de la figure 16.

L'outil 100 de la quatrième variante du deuxième mode de réalisation est équipé de deux bossages 141, un autour de chaque orifice de fixation 140, dont les caractéristiques sont les mêmes que celles décrites précédemment en relation avec l'une des figures 9 à 13.

On peut donc constater la forme globale en T de l'outil vibrant pour le premier et le deuxième mode de réalisation. Cette forme en T correspond à la forme du contour de la première face principale 110 et de la deuxième face principale 120. Dans ce cas, l'outil vibrant 100 ne comporte qu'une seule portion en forme de tête aplatie (portion de tête 102) et une seule portion en forme de jambe (portion de jambe 104).

On se rapporte aux figures 20 à 25 représentant un outil vibrant 100 selon un troisième mode de réalisation de l'invention. Pour ce troisième mode de réalisation, l'outil 100 présente une forme générale de double T, sous forme de deux parties en forme de T superposées, les deux portions de jambe étant alignées l'une avec l'autre et les deux portions de tête étant parallèles entre elles. Dans ce troisième mode de réalisation, on dispose d'un outil double : c'est comme si la face d'extrémité 134 d'un outil 100 simple du premier mode de réalisation ou du deuxième mode de réalisation était fixée à l'autre face d'extrémité 131 d'un outil 100 simple du premier mode de réalisation ou du deuxième mode de réalisation. Dans ce troisième mode de réalisation, pour chaque partie en forme de T de l'outil 100, il est possible de reprendre les mêmes dispositions et parties que celles précédemment décrites en relation avec l'une ou l'autre des variantes du premier mode de réalisation ou du deuxième mode de réalisation, chacune des deux parties en forme de T pouvant être identique à l'autre ou bien différente de l'autre.

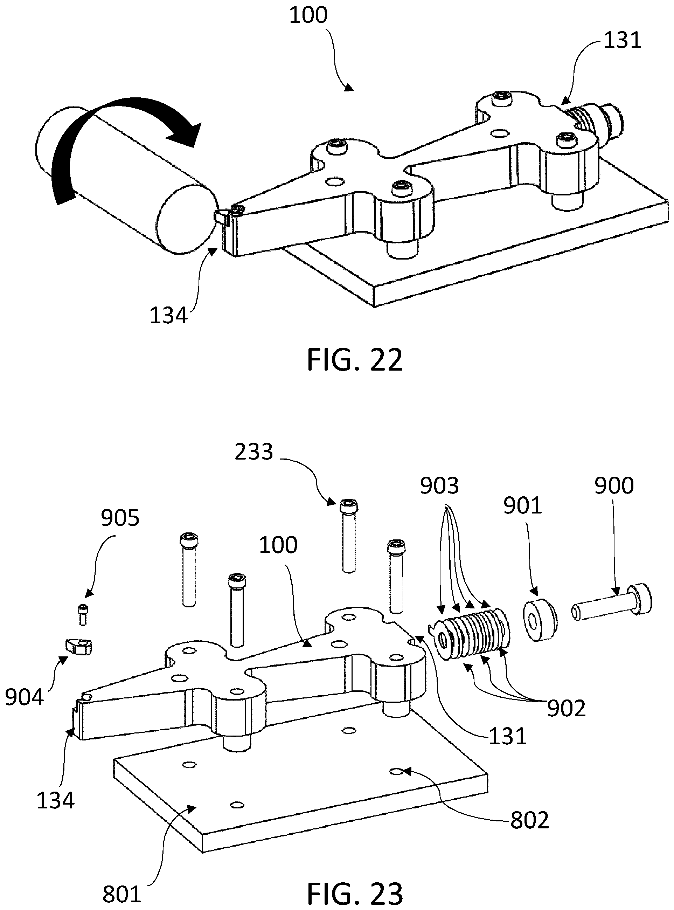

Dans le cas des figures 20 et 21, l'outil double 100 du troisième mode de réalisation comporte deux parties en forme de T qui sont conformes à la quatrième variante du deuxième mode de réalisation précédemment décrite en relation avec la figure 19. Chaque partie en forme de T de cet outil comporte deux orifices de fixation 140 dans la partie de tête correspondante, lesquels orifices de fixation 140 sont entourés d'un bossage 141, ce par quoi cet outil 100 peut être monté selon une fixation rigide sur un élément supportant directement ou indirectement l'outil (et ne vibrant pas), tel qu'un bâti machine ou une plaque de support. Ce troisième mode de réalisation de l'outil 100 offre l'avantage de disposer de deux paires (de points) d'orifices de fixation 140 éloignés les uns des autres, ce qui améliore la stabilité de fixation de l'outil sur l'élément de support, ainsi que la reprise d'efforts extérieurs appliqués sur l'outil 100. Ce troisième mode de réalisation de l'outil 100 permet aussi l'augmentation de l'amplitude de déformation obtenue directement par cet outil selon deux étages correspondant au double T. La première partie en forme de T (en haut sur les figures 20 et 21 et à droite sur les figures 22 et 23), qui est reliée au dispositif générant l'énergie vibratoire, amplifie l'amplitude de déformation par la géométrie du chanfrein le long des tronçons des faces latérales 133 et 135 de la portion de jambe 104. La deuxième partie en forme de T de l'outil 100 (en bas sur les figures 20 et 21 et à gauche sur les figures 22 et 23) est ainsi soumise à la vibration mécanique sortant de la face d'extrémité 134 de la portion de jambe 104 de la première partie en forme de T, qui est une vibration mécanique plus importante que celle apportée en amont de la face 131 de la première partie en forme de T. Cette deuxième partie en forme de T peut ensuite augmenter l'amplitude de déformation directement par la géométrie du chanfrein le long des tronçons des faces latérales 133 et 135 de sa portion de jambe 104. Cette augmentation de l'amplitude de déformation est visible sur le graphique de la figure 20. L'amplitude A1 correspond à l'amplitude de déformation transmise par l'élément générant la vibration mécanique monté sur l'orifice 138 de la première partie en forme de T. La valeur absolue de déformation de l'amplitude A1 est plus petite que la valeur absolue de déformation de l'amplitude A2 sortant de la face d'extrémité 134 de la portion de jambe 104 de la première partie en forme de T (à mi-hauteur de la figure 20). La valeur absolue de déformation de l'amplitude A2 est plus petite que la valeur absolue de déformation de l'amplitude A3 à l'extrémité de la deuxième partie en forme de T au niveau de sa face d'extrémité 134 (tout en bas de la figure 20).

Chaque partie en forme de T de cet outil comporte un orifice de réglage 160 dans la portion de la partie de jambe 104 qui est adjacente à la partie de tête 102 correspondante. On dispose d'un orifice de montage 138 à chaque extrémité libre de cette outil double 100. Un orifice de montage 138 sur la face d'extrémité 131 de la première partie en forme de T et un orifice de montage 138 sur la face d'extrémité 134 de la seconde partie en forme de T.

Dans le cas des figures 22 et 23, l'outil double 100 d'une première variante du troisième mode de réalisation comporte deux parties en forme de T : la première partie en forme de T disposée contre la face d'extrémité 131 de la seconde partie en forme de T, est conforme au deuxième mode de réalisation précédemment décrit en relation avec la figure 15, et la seconde partie en forme de T avec la face d'extrémité 134 qui forme une extrémité libre de l'outil 100 est conforme à la deuxième variante du troisième mode de réalisation précédemment décrit en relation avec la figure 17, et comporte un orifice de montage 139 sous forme de découpe. Chaque partie en forme de T de cet outil comporte deux orifices de fixation 140 entourés d'un bossage 141 et qui sont montés selon une fixation rigide via des éléments de fixation (sous la forme de vis de fixation 233) placés dans les orifices de fixation 140 et dans les ouvertures traversantes 802 situées, en correspondance des orifices de fixation 140, sur une plaque de support 802 ne vibrant pas. Dans cet assemblage, formant un système vibratoire complet, on utilise à titre de dispositif générant l'énergie vibratoire à la fréquence souhaitée, et mettant en vibration l'outil 100, un dispositif vibratoire à stimulation piézoélectrique. Ce dispositif vibratoire à stimulation piézoélectrique comporte, en appui sur la face d'extrémité 131 de la première partie en forme de T, une série d'anneaux superposés et alternativement composés d'un disque piézoélectrique 902 et d'une électrode 903. A l'arrière de cette série d'anneaux superposés, est disposée une contre-masse 901 également annulaire. Une vis de fixation 900 traverse l'ouverture centrale de la contre-masse 901, des disque piézoélectrique 902 et des électrode 903 jusque dans l'orifice de montage 138 de la face d'extrémité 131 de la première partie en forme de T. Sur la face d'extrémité 134 de la seconde partie en forme de T, qui forme l'autre extrémité libre de l'outil 100, est montée, dans l'orifice de montage 139, une plaquette d'usinage 904 retenue par une vis de fixation 905. Cet assemblage permet de constituer une machine d'usinage à ultrasons.

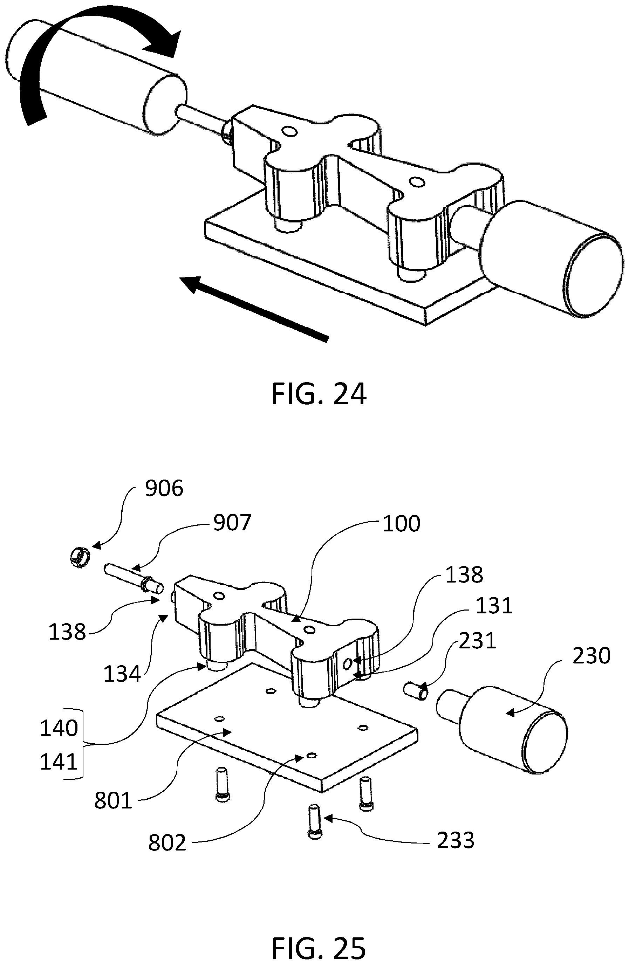

Dans le cas des figures 24 et 25, l'outil double 100 est conforme au troisième mode de réalisation précédemment décrit en relation avec les figures 20 et 21. Dans cette variante d'assemblage, on utilise à titre de dispositif générant l'énergie vibratoire à la fréquence souhaitée, et mettant en vibration l'outil 100, un dispositif vibratoire comprenant un transducteur 230 qui est relié via un élément de raccordement 231 (et un éventuel booster non représenté) à l'orifice de montage 138 de l'outil 100. Comme dans l'assemblage des figures 22 et 23, les quatre orifices de fixation 140, entourés d'un bossage 141, sont montés selon une fixation rigide via des éléments de fixation (sous la forme de vis de fixation 233) placés dans les orifices de fixation 140 et dans les ouvertures traversantes 802 situées, en correspondance des orifices de fixation 140, sur une plaque de support 802 ne vibrant pas. Sur la face d'extrémité 134 de la seconde partie en forme de T, qui forme l'autre extrémité libre de l'outil 100, est montée, dans l'orifice de montage 138, une mèche de perçage 907 retenue par un écrou de serrage 306. Cet assemblage permet de constituer une machine de perçage à ultrason.

On peut donc constater que l'outil vibrant du troisième mode de réalisation présente une forme globale de double T avec les deux T alignés et superposés. Cette forme en double T correspond à la forme du contour de la première face principale et de la deuxième face principale. Dans ce cas, l'outil vibrant comporte précisément deux portions en forme de tête aplatie (portion de tête) et deux portions en forme de jambe (portion de jambe), avec en série un premier tronçon en forme de T présentant une portion de tête et une portion de jambe, et un deuxième tronçon en forme de T présentant une portion de tête et une portion de jambe. On a donc une première portion de tête suivie de façon adjacente et attenante, par une première portion de jambe, suivie de façon adjacente et attenante, par une deuxième portion de tête, suivie de façon adjacente et attenante, par une deuxième portion de jambe. De préférence, pour chaque tronçon en forme de T, on a la même configuration (emplacement et nombre) en termes de zone(s) nodale(s), de zone(s) fonctionnelle(s), d'orifice(s) de montage et/ou de zone(s) de fixation. Un tel outil vibrant en forme de double T conserve comprenant un premier plan de symétrie P1 formé du plan moyen situé entre la première face principale et la deuxième face principale et un deuxième plan de symétrie P2 parallèle à la deuxième direction, le premier plan P1 et le deuxième plan P2 étant orthogonaux entre eux, si l'on met de côté la découpe ou encoche 139 dans le cas de la première variante du troisième mode de réalisation des figures 22 et 23.

On comprend que les configurations d'outil vibrant 100 décrites et illustrées dans la présente demande permettent de faire apparaitre sur un outil vibrant des zones nodales 180 ayant des déformations en rotation autour de points nodaux , sur lesquels on a de préférence placé un orifice de fixation 140. On obtient un système de fixation d'outil vibrant 100, tel qu'une sonotrode ou un booster, basé sur un mouvement rotatif de va-et-vient d'une zone nodale de l'outil vibrant 100 autour d'un point/orifice de fixation. Ce montage se distingue des systèmes traditionnels de montage des systèmes ultrasoniques dans lesquels l'outil vibrant est fixé sur son support statique à l'emplacement de ses points nodaux fixes ayant une éventuelle déformation en contraction/élongation autour d'un point nodal fixe.

Il apparaît que les conceptions d'outils vibrants qui viennent d'être décrites permettent de conserver un mode vibratoire qui provoque la contraction et la dilatation de l'outil notamment sur la longueur de celui-ci, à savoir entre les faces d'extrémités, mais également sur la largeur de l'outil à savoir entre les faces latérales de la bordure.

Selon une possibilité, l'outil présente un rapport dimensionnel entre sa largeur et sa longueur (mesurées au repos donc sans sollicitation ou excitation vibratoire, respectivement entre les faces latérales de la bordure et entre les faces d'extrémité de la bordure) qui est compris entre 0.6 et 0.9, et de préférence entre 0.7 et 0.85.

Selon un mode de réalisation, l'outil est en un matériau métallique. Par exemple, et de manière non limitative, un tel matériau appartient à la liste suivante : Aciers, fonte, ou encore fer, aluminium, titane et leurs alliages...

Selon un mode de réalisation, l'outil peut être usiné par des procédés conventionnel tel que le fraisage et l'électroérosion à fil mais aussi par des procédés tel que l'impression 3D métallique (frittage sélectif au laser) ou la combinaison des procédés de fraisage et d'impression 3D pour la fabrication d'un même outil 100.

On comprend que ces géométries d'outils vibrant 100 permettent différents modes de réalisation et d'assemblages de ces géométries d'outils vibrant 100 sous forme de produits industriels permettant l'implémentation des ultrasons dans des mécanismes ou système de production.

### Signes de référence employés sur les figures

- P1: Premier plan
- P2: Deuxième plan
- P3: Troisième plan
- X: Première direction
- Y: Troisième direction
- Z: Deuxième direction
- L: Longueur de l'outil selon la deuxième direction (Z)
- l: Largeur de la portion de tête selon la première direction (X)
- P: Profondeur de l'outil selon la troisième direction (Y)
- C: Largeur la plus grande la portion de jambe selon la première direction (X)
- 100: Outil vibrant
- 100': Outil vibrant
- 102: Portion de tête
- 104: Portion de jambe
- 110: Première face principale
- 120: Deuxième face principale
- 130: Bordure
- 131: Face d'extrémité
- 131a: Renfoncement de la face 131
- 131b: Bossage sur la surface 131
- 133: Face latérale
- 133a: Tronçon courbe
- 133b: Tronçon plan
- 133c: Tronçon intermédiaire
- 133d: Renfoncement du Tronçon intermédiaire (congé)
- 134: Face d'extrémité
- 135: Face latérale
- 135a: Tronçon courbe
- 135b: Tronçon plan
- 135c: Tronçon intermédiaire
- 135d: Renfoncement du Tronçon intermédiaire (congé)
- 138: Orifice de montage
- 139: Orifice de montage (encoche ou découpe)
- 140: Orifice de fixation
- 141: Bossage
- 160: Orifice de réglage
- 170: Bossage de fixation
- 180: Zone nodale
- 190: Zone fonctionnelle
- 230: transducteur
- 231: Elément de raccordement
- 233: Vis de fixation
- 801: Plaque de support
- 802: Ouverture traversante
- 900: Vis de fixation de l'ensemble générant la vibration mécanique
- 901: Contre-masse
- 902: Disque piézoélectrique
- 903: Electrode
- 904: Plaquette d'usinate
- 905: Vis de fixation de la plaquette d'usinage
- 906: Ecrou de serrage de la mèche
- 907: Mèche de perçage
- 908: Gorge d'ajustement du bossage 141

## Revendications

1. Outil (100) apte à vibrer lorsqu'il est soumis à une excitation vibratoire de fréquence f, ledit outil (100) étant massif et définissant:
- au moins une portion de tête (102) située dans le prolongement d'une portion de jambe (104) qui est centrée par rapport à la portion de tête (102), la portion de tête (102) étant de forme générale allongée selon une première direction (X), la portion de jambe (104) étant de forme générale allongée selon une deuxième direction (Z) orthogonale à la première direction (X), la portion de tête (102) définissant à chacune de ses extrémités selon la première direction un profil courbe,
ledit outil définissant aussi
une première face principale (110) et une deuxième face principale (120) présentant le même contour qui délimite au moins ladite portion de tête (102) et ladite portion de jambe (104) selon une forme en T, et
- une bordure (130) constituée d'une troisième face encerclant ledit outil (100) entre la première face principale et la deuxième face principale,
ledit outil (100) étant agencé de sorte que pendant la vibration à une fréquence de travail f0 prédéfinie, au moins une zone dudit outil forme une zone nodale (180) et au moins une zone dudit outil forme une zone fonctionnelle (190) qui présente une déformation pendant ladite excitation vibratoire, et
ledit outil (100) comportant en outre au moins un orifice de montage (138) débouchant dans la bordure (130) et apte à relier ledit outil (100) à un élément présentant une énergie vibratoire.

2. Outil selon la revendication précédente, dans lequel ledit outil (100) définit deux plans de symétrie pour la portion de tête (102), comprenant un premier plan de symétrie P1 formé du plan moyen situé entre la première face principale (110) et la deuxième face principale (120) et un deuxième plan de symétrie P2 parallèle à la deuxième direction, le premier plan P1 et le deuxième plan P2 étant orthogonaux entre eux.

3. Outil selon la revendication précédente, dans lequel le premier plan de symétrie P1 et le deuxième plan de symétrie P2 sont également les plans de symétrie de la portion de jambe (104).

4. Outil selon l'une des revendications 1 à 3, dans lequel la largeur la plus grande (C) de la portion de jambe (104) selon la première direction (X) est plus petite que la largeur la plus grande (l) de la portion de tête (102) selon la première direction (X)
à savoir C <l.

5. Outil selon la revendication précédente, dans lequel le rapport entre la largeur la plus grande (l) de la portion de tête (102) selon la première direction (X) et la largeur la plus grande (C) de la portion de jambe (104) selon la première direction (X) est plus grande ou égale que 1,4
à savoir 1,4 ≤ l / C .

6. Outil selon l'une des revendications 1 à 5, dans lequel la dimension P la plus grande entre la première face et la deuxième face, forme la profondeur P de l'outil et cette profondeur P est plus petite ou égale à la largeur la plus grande (l) de la portion de tête (102) selon la première direction,
à savoir P < l

7. Outil selon l'une des revendications 1 à 6, dans lequel ledit outil (100) comporte au moins une zone de fixation (140) attenante à ladite première face principale (110) et/ou à ladite deuxième face principale (120) et apte à relier ledit outil (100) à un autre élément.

8. Outil selon la revendication précédente, comportant au moins deux zones de fixation (140) situées dans la portion de tête (102), chacune de part et d'autre de la projection de la portion de jambe (104) selon la deuxième direction (Z).

9. Outil selon l'une des revendications 1 à 8, dans lequel ledit outil (100) comporte au moins deux zones nodales (180) situées dans la portion de tête (102), chacune de part et d'autre de la projection de la portion de jambe (104) selon la deuxième direction (Z).

10. Outil selon les revendications 8 et 9, dans lequel ladite zone de fixation (140) est située à l'emplacement d'une zone nodale (180).

11. Outil selon quelconque des revendications 1 à 10, dans lequel les extrémités de la portion de tête (102) selon la première direction (X) délimitent sur la première face principale et sur la deuxième face principale un profil courbe qui comporte un arc de cercle.

12. Outil selon quelconque des revendications 1 à 11, ledit outil présentant depuis sa première face principale (110) ou depuis sa deuxième face principale (120), une Forme de T définissant une seule tête et une seule jambe.

13. Outil selon quelconque des revendications 1 à 11, ledit outil présentant depuis sa première face principale (110) ou depuis sa deuxième face principale (120), une forme de double T avec un premier tronçon en forme de T présentant une portion de tête (102) et une portion de jambe (104), et un deuxième tronçon en forme de T situé dans la prolongation du premier tronçon, ledit deuxième tronçon présentant une portion de tête (102) et une portion de jambe (104), dans lequel ledit premier tronçon et ledit deuxième tronçon sont alignés le long de la deuxième direction (Z).

14. Outil selon quelconque des revendications 1 à 13, dans lequel ladite première face principale (110) et ladite deuxième face principale (120) sont essentiellement planes et parallèles entre elles.

15. Outil selon l'une des revendications 1 à 14, ledit outil comporte un orifice de réglage (160) placé dans une zone de la portion de jambe (104) qui est adjacente à la portion de tête (102).
